# EUROPÄISCHE PATENTSCHRIFT

(11) **EP 1 818 549 B1**
(45) Veröffentlichungstag und Bekanntmachung des Hinweises auf die Patenterteilung: **13.05.2009**
(21) Anmeldenummer: 07002320.5
(22) Anmeldetag: 02.02.2007
(51) Int. Cl.: F16B 37/06

(54) **In einem Durchbruch einer Metallplatte einsetzbares Mutterteil**
A nut which can be mounted in the perforation of a metal plate
Raccord femelle pouvant être monté dans une perforation de plaque métallique

(30) Priorität: 10.02.2006 DE 202006002173 U
(43) Veröffentlichungstag der Anmeldung: 15.08.2007
(73) Patentinhaber: EJOT GmbH & Co. KG, 57334 Bad Laasphe (DE)
(72) Erfinder: Christ, Eberhard, Dr., 99897 Tambach-Dietharz (DE); Göring, Marko, 99867 Gotha (DE)
(74) Vertreter: Bardehle, Heinz

(56) Entgegenhaltungen:
- EP-A- 1 060 826
- WO-A-20/06008122
- DE-U- 1 925 042
- US-A- 3 429 591
- US-A- 3 547 741

## Beschreibung

Die Erfindung bezieht sich auf ein in einen Durchbruch einer Metallplatte einsetzbares Mutterteil aus Kunststoff für ein von einem Loch des Mutterteils aufnehmbares Befestigungsmittel, insbesondere eine Schraube, mit einem an der Metallplatte anlegbaren Flansch.

Derartige Mutterteile sind in verschiedenen Ausführungsformen bekannt. Sie können in den Durchbruch der Metallplatte eingeschraubt sein, es ist auch möglich, das Mutterteil einzukleben. Darüber hinaus sind Mutterteile bekannt, die nach Einsetzen in den Durchbruch der Metallplatte durch ausspreizbare Schnapphaken an der Metallplatte gehalten werden. Ein solches Mutterteil ist beispielsweise in der DE 103 05 610 A1 dargestellt und beschrieben.

Diese bekannten Verbindungen zwischen Metallplatte und Mutterteil sind nur bedingt belastbar. Es gibt jedoch Anwendungsfälle, in denen ein solches Mutterteil besonders fest mit der Metallplatte verbunden sein soll. Diese Aufgabe wird gemäß der Erfindung dadurch gelöst, dass in den Flansch ein koaxialer Metallring eingebettet ist, der mit einer Stirnseite mit der Oberfläche der Metallplatte in Berührungskontakt bringbar und bei Rotation des Mutterstückes zusammen mit dem Metallring durch Reibschweißen mit der Metallplatte verbindbar ist.

Die Reibschweißverbindung zwischen dem Metallring und der Metallplatte kann erhebliche Kräfte aufnehmen, da die Reibschweißverbindung eine besonders feste Verbindung herstellt. Auf Grund der Einbettung des Metallrings in dem Mutterteil ergibt sich für das Mutterteil selbst eine entsprechend feste Verbindung mit der Metallplatte.

Für die Einbettung des Metallrings in den Kunststoff des Mutterteils und die Gestaltung des Metallrings gibt es verschiedene Möglichkeiten. Eine konstruktiv einfache Gestaltung besteht darin, dass der Metallring mit einem koaxialen Kragen aus dem Flansch herausragt, der in Reibschweißkontakt mit der Platte bringbar ist. Bei der Rotation des Mutterteils gegenüber der Metallplatte reibt der Kragen auf der Oberfläche der Metallplatte und verbindet sich mit der Metallplatte bei entsprechender Rotation durch eine Reibschweißverbindung. Den Kragen kann man am Innenrand des Metallrings ansetzen, es ist aber auch möglich, den Kragen am Außenrand des Metallrings anzusetzen.

Den Kragen kann man verschieden ausrichten. Einerseits ist es möglich, den Kragen so zu gestalten, dass er in Einschraubrichtung des Befestigungsmittels gerichtet ist. Es ist jedoch auch möglich, den Kragen gegen die Einschraubrichtung des Befestigungsmittels zu richten. Im ersteren Falle setzt sich der an der Metallplatte anlegbare Flansch an deren Oberseite an, so dass der Flansch an dieser Seite zugänglich ist. Bei Ausrichtung des Kragens gegen die Einschraubrichtung des Befestigungsmittels liegt der Flansch an der Unterseite der Metallplatte an, so dass ein mit der Metallplatte zu verbindendes Bauteil von dem Befestigungsmittel gegen die Oberseite der Metallplatte gedrückt wird.

Darüber hinaus kann man dem Kragen verschiedene Gestaltungen geben. So ist es möglich, den Kragen zylindrisch zu gestalten, es ist aber auch möglich, den Kragen eine konische Gestaltung zu geben. Im Falle zylindrisch ausgebildeten Kragens ergibt sich eine Reibschweißfläche, die dem Querschnitt des Kragens entspricht. Im Falle eines konischen Kragens ergibt sich ein Einbringen des konischen Kragens in den Durchbruch der Metallplatte, womit über deren Dicke und gegebenenfalls einen bei der Herstellung des Durchbruchs sich ausbildenden Durchzug eine größere Berührungsfläche zwischen Kragen und Metallplatte und damit eine breitere Zone der Reibschweißverbindung entsteht.

Den Metallring kann man so in das Mutterteil einbetten, dass der Flansch des Mutterteils den Metallring größtenteils umgibt, wobei mittels Durchbrüchen im Metallring dafür gesorgt wird, dass der Metallring keine Abtrennung von Kunststoffmaterial innerhalb des Mutterteils bewirkt. Der Kunststoff des Mutterteils setzt sich in den Durchbrüchen des Metallrings fort, wodurch dafür gesorgt ist, dass von dem Metallring keine Aufteilung des Kunststoffmaterials über die gesamte Länge des Metallrings entstehen kann. Eine weitere Variante der Gestaltung des Metallrings besteht darin, dass der Metallring das Mutterteil mit Unterbrechungen umgibt und mit einem unterbrochenen Kragen aus dem Flansch entgegen der Einschraubrichtung ohne Abtrennung von Kunststoffinaterial herausragt. In diesem Falle wird das Mutterteil in seinem in den Durchbruch der Metallplatte ragenden Bereich von dem Metallring umfasst, dessen mit Unterbrechungen aus dem Flansch des Mutterteils herausragenden Kragen die Möglichkeit gibt, für eine Reibschweißverbindung herangezogen zu werden, und zwar eine solche, bei der der Metallring aus dem Flansch entgegen der Einschraubrichtung herausragt.

Um das Mutterteil im Durchbruch der Metallplatte in Rotation zu versetzen, kann man dem Mutterteil zweckmäßig eine solche Gestaltung geben, bei der der Flansch einen Sechskant bildet. Der Sechskant kann dann für das Ansetzen eines Schraubwerkzeugs dienen, mit dessen Hilfe das Mutterteil im Durchbruch der Metallplatte verdrehbar ist. Es ist auch möglich, das Mutterteil mit einer Aufnahme für ein Einsetzwerkzeug zu versehen, z. B. die Aufnahme für ein Inbuswerkzeug, um beim Drehen des Mutterteils im Durchbruch einer Metallplatte das notwendige Drehmoment zu erzeugen.

Es ist auch möglich, das Mutterteil selbst als Vieleck auszubilden, das in diesem Falle direkt von einem Drehwerkzeug erfasst werden kann.

Eine weitere Möglichkeit, das Mutterteil mit dem Metallring in günstiger Weise in Drehung zu versetzen besteht darin, den Metallring selbst als Vieleck auszubilden. In diesem Fall kann der Metallring als Aufnahme für ein Drehmoment beim Eindrehen des Mutterteils in die Metallplatte dienen.

In den Figuren sind Ausführungsbeispiele der Erfindung dargestellt. Es zeigen:
- Figur 1: Das Mutterteil mit einem in seinem Flansch eingebetteten Metallring;
- Figur 2: Eine Draufsicht auf die Gestaltung gemäß Figur 1 als Schnitt gemäß der Linie II - II;
- Figur 3: Eine Abwandlung der Gestaltung gemäß Figur 1;
- Figur 4: Eine weitere Gestaltung des Mutterteils;
- Figur 5: Das Mutterteil gemäß Figur 1 mit einer Reibschweißverbindung mit einer Metallplatte, wobei der Flansch des Mutterteils auf der Oberseite der Metallplatte aufliegt;
- Figur 6: Eine Verbindung zwischen Mutterteil und Metallplatte gemäß Darstellung in Figur 4, gemäß der der Flansch an der Unterseite der Metallplatte anliegt;
- Figur 7: Das Mutterteil mit einem Metallring und konischem Kragen;
- Figur 8: Eine Draufsicht auf die Gestaltung gemäß Figur 7 mit einem Innensechskant zum Ansetzen eines entsprechenden Werkzeuges
- Figur 9: Eine Draufsicht auf das Mutterteil gemäß Figur 1 mit einem als Sechskant ausgebildeten Flansch;
- Figur 10: Eine Ansicht der Gestaltung gemäß Figur 4 von der dem Flansch abgewandten Seite des Mutterteils;
- Figur 11: Das Mutterteil mit einem dieses umgebenden Metallring, der mit einem unterbrochenen Kragen aus dem Flansch herausragt;
- Figur 12: Eine Draufsicht auf die Gestaltung gemäß Figur 11;
- Figur 13: Eine perspektivische Ansicht des Mutterteils gemäß Figur 12;
- Figur 14: Eine Ansicht der Gestaltung gemäß Figur11 von der dem Flansch abgewandten Seite des Mutterteils;
- Figur 15: Eine perspektivische Ansicht des Mutterteils gemäß Figur 14.

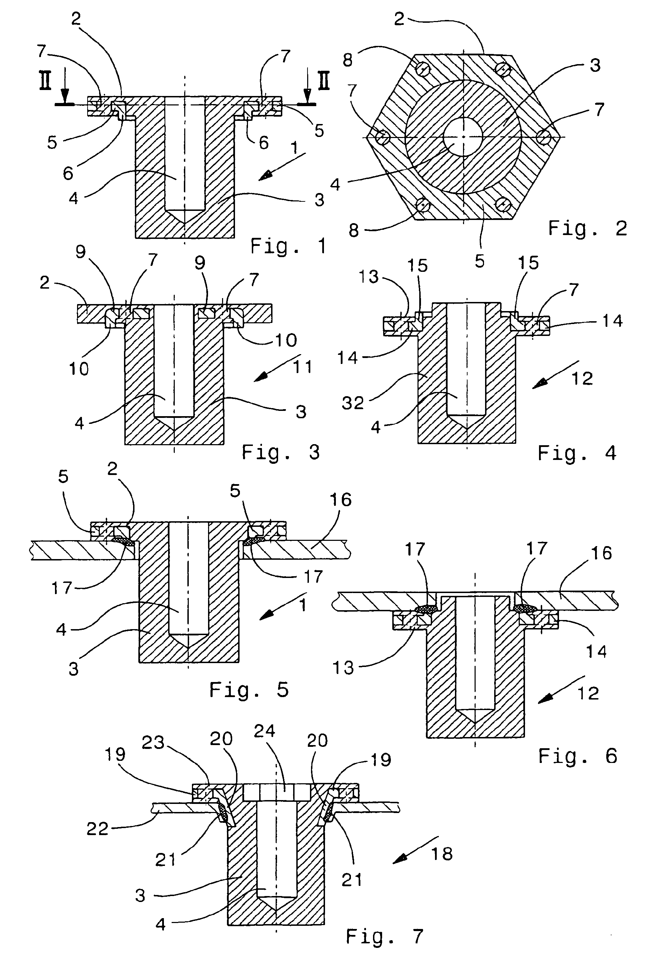

In der Figur 1 ist das Mutterteil 1 mit seinem Flansch 2 und seinem Tubus 3 dargestellt, in den das Loch 4 eingeformt ist. Das Loch 4 kann z. B. zur Aufnahme einer selbstfurchenden Gewindeschraube dienen. In den Flansch 2 ist der Metallring 5 eingebettet, der mit dem Kragen 6 versehen ist. Der Kragen 6 ragt aus der Unterseite des Flansches 2 hervor und dient dazu, mit einer Metallplatte durch Reibschweißen verbunden zu werden, worauf unten näher eingegangen wird. Damit der Flansch 5 dem Flansch 2 nicht in 2 Teile aufteilt, die keine Verbindung miteinander hätten, ist der Metallring 5 mit Löchern versehen, die in der Darstellung gemäß Figur 1 durch die Kunststoffbrücken 7 ausgefüllt sind und die die Oberseite und die Unterseite des Flansches 2 miteinander verbinden.

Um die Gestaltung des Mutterteils 1 gemäß Figur 1 zu verdeutlichen, ist in Figur 2 ein Schnitt längs der Linie II-II aus Figur 1 dargestellt. Aus dieser Schnittdarstellung ist ersichtlich, wie die in Figur 1 dargestellte Oberseite und die Unterseite des Flansches 2 durch die Kunststoffbrücken 7 miteinander verbunden sind. Die Kunststoffbrücken 7 füllen Löcher 8 im Metallring 5 aus, die für die Erzeugung der Kunststoffbrücken 7 vorgesehen sind.

In der Darstellung gemäß Figur 1 ist gezeigt, dass der Kragen 6 des Metallrings 5 am Innenrand des Metallrings 5 ansetzt.

In der Figur 3 ist eine Abwandlung der Gestaltung gemäß den Figuren 1 und 2 dargestellt, bei der der Metallring 9 der im Wesentlichen im Flansch 2 eingebettet ist, an seinem Außenrand mit dem Kragen 10 versehen ist. Im übrigen besitzt der Metallring 9, wie bei der Gestaltung gemäß den Figuren 1 und 2, Löcher, die von Kunststoffbrücken 7 ausgefüllt sind, durch die die Oberseite des Flansches 2 mit der Unterseite verbunden sind. Sonst stimmt die Gestaltung des Mutterteils 11 mit der Gestaltung des Mutterteils 1 gemäß den Figuren 1 und 2 überein.

Bei den Ausführungsbeispielen gemäß den Figuren 1 - 3 ragt der Kragen aus der Unterseite des Flansches 2 in Einschraubrichtung einer in das Loch 4 einsetzbaren Schraube heraus.

In der Figur 4 ist eine ähnliche Gestaltung eines Mutterteils 12 dargestellt, bei dem im Flansch 13 der Metallring 14 eingebettet ist. Der Metallring 13 ist an seinem Innenrand mit dem Kragen 15 versehen, der an der Oberseite des Flansches 13 herausragt.

In der Figur 5 ist die Kunststoffmutter 1 zusammen mit der Metallplatte 16 dargestellt, wobei Metallplatte 16 und Flansch 2 der Kunststoffmutter 1 durch Reibschweißen miteinander verbunden sind. Die Reibschweißverbindung ist hier mit dem Bezugszeichen 17 dargestellt. Darin erfolgt die Verbindung zwischen Metallring 5 und Metallplatte 16 über die Unterseite des Flansches 2, der auf der Oberseite der Metallplatte 16 aufsitzt.

In der Figur 6 ist ebenfalls eine Verbindung vom Mutterteil 12 und Metallplatte 16 dargestellt, wobei die Verbindung zwischen dem Metallring 14 und der Metallplatte 16 über die Oberseite des Flansches 13 erfolgt. Dabei liegt der Flansch 13 an der Unterseite der Metallplatte 16 an.

In der Figur 7 ist eine Abwandlung der vorstehend beschriebenen Gestaltungen von Mutterteil mit Metallring dargestellt, gemäß der der Metallring 19 einen konischen Kragen 20 aufweist. Der konische Kragen 20 führt zu einer festen Reibschweißverbindung im Bereich 21, da sich dort der konische Kragen 20 gewissermaßen in den Durchbruch der Metallplatte 22 verschweißt.

Zu den vorstehend dargestellten Verbindungen zwischen Mutterteil und Metallplatte wird darauf hingewiesen, dass in allen Fällen das Mutterteil in den Durchbruch einer Metallplatte eingesetzt ist und das Mutterteil durch irgendein Werkzeug in Drehung versetzt worden ist, wodurch sich im Bereich der dargestellten Reibschweißverbindungen dann eine entsprechende Erhitzung und damit Reibschweißverbindung ergibt.

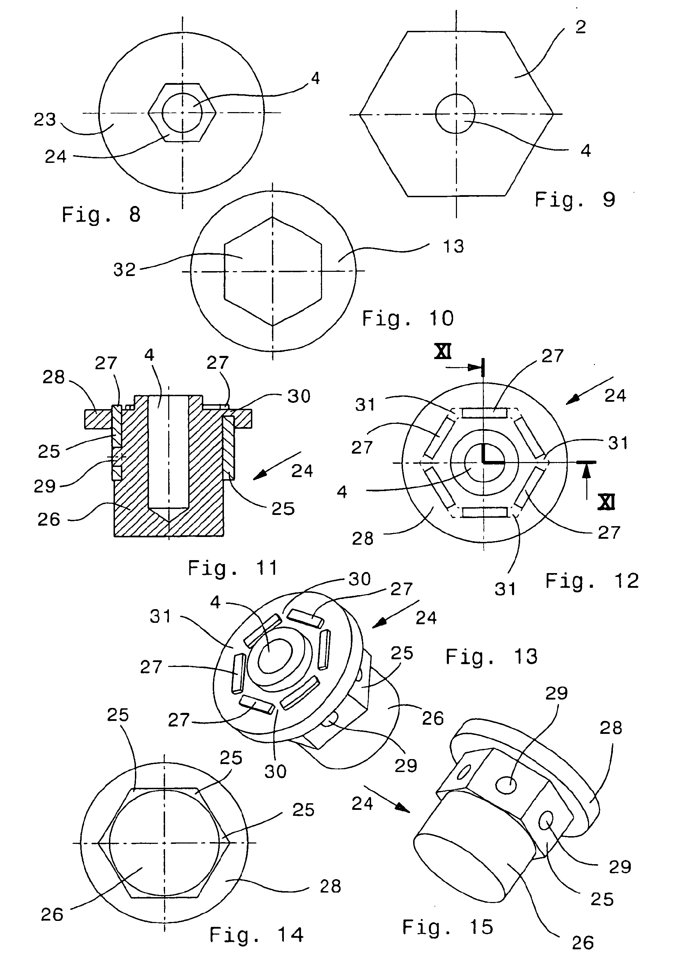

Das Mutterteil 18 gemäß Figur 7 besitzt im Bereich seines Flansches 23 eine Sechskantaufnahme 24 für ein entsprechend sechskantiges Einsatzwerkzeug (Inbus), durch den einerseits über das Mutterteil 18 auf ein Gegenstück, nämlich gemäß Figur 7 die Metallplatte 22, ein Reibdruck ausgeübt wird, womit es dann zu der Reibschweißverbindung 21 kommt. Die sechskantige Aufnahme 24 gemäß Figur 7 ist in der Draufsicht gemäß Figur 8 ebenfalls deutlich zu sehen.

In Figur 9 ist eine Draufsicht auf die Gestaltung gemäß Figur 1 und Figur 2 dargestellt, gemäß der der Flansch 42 als Sechskant ausgebildet ist. Zum Eindrehen des Mutterteils 1 oder 11 in den Durchbruch einer Metallplatte ist der Flansch 2 des Mutterteils 1 oder 11 als Sechskant ausgebildet, der damit von einem entsprechenden Werkzeug aufgenommen und in Drehung versetzt werden kann.

In der Figur 10 ist eine Gestaltung des Mutterteils dargestellt, bei dem der Tubus 32 selbst als Sechskant ausgebildet ist und damit als Gegenstück ein entsprechendes Werkzeug verwendet werden kann. Bei der Figur 10 handelt es sich um eine Draufsicht auf die Unterseite des Flansches 13 aus Figur 4.

In der Figur 11 ist ein Mutterteil 24 dargestellt, das einen Metallring 25 aufweist, der den Tubus 26 des Mutterteils 24 umgibt und als Metallring 25 dazu dient, das Drehmoment zur Rotation des Mutterteils 24 zu übertragen. Der Metallring 25 durchsetzt mit einzelnen Zähnen 27 den Flansch 28, wodurch gewährleistet ist, dass der Flansch 28 eine Einheit mit dem Tubus 26 bildet. Damit der den Tubus 26 umgebende Metallring 25 am Tubus 26 festgehalten wird, ist dieser mit Durchbrüchen 29 versehen, die mit Kunststoff des Mutterteils 24 ausgefüllt sind und damit eine drehfeste Verbindung von Metallring 25 und Tubus 26 herstellen. Der Flansch 28 ist mit einer Anzahl von Durchbrüchen 30 versehen, durch die gewährleistet ist, dass die Außenseite des Flansches 28 nicht von dem Tubus 26 abgetrennt wird.

Die Gestaltung der Zähne 27 aus Figur 11 geht auch deutlich aus der Draufsicht der Figur 12 hervor, die einerseits die Zähne 27 und die dazwischen liegenden Kunststoffbrücken 31 zeigt.

Die Gestaltung des Mutterteils 24 mit dem Metallring 25 geht besonders deutlich in der perspektivischen Darstellung gemäß Figur 13 hervor.

Figur 14 zeigt das Mutterteil gemäß Figur 11 in einer Draufsicht auf die Unterseite des Tubus 26. Wie dargestellt, besitzt der Metallring 25 eine Sechskantform, um ein Werkzeug direkt an ihm ansetzen zu können.

In der Figur 15 ist eine perspektivische Darstellung des Metallrings gemäß Figur 11 dargestellt, aus der der Tubus 26 des Metallrings 25 deutlich ersichtlich ist, Der Metallring ist hier, wie im Zusammenhang mit der Figur 14 dargestellt, durch ein Sechskant gebildet. Die einzelnen Sechskantflächen des Metallrings 25 sind hier durch die Durchbrüche 29 durchsetzt, in die Kunststoffinaterial aus dem Tubus 26 eingedrungen ist und damit die drehfeste Verbindung zwischen Metallring 25 und Tubus 26 herstellt.

## Patentansprüche

1. In einen Durchbruch einer Metallplatte (16, 22) einsetzbares, rotationssymmetrisches Mutterteil (1, 11, 12, 18, 24) aus Kunststoff für ein von einem Loch (4) des Mutterteils (1, 11, 12, 18, 24) aufnehmbares Befestigungsmittel, insbesondere eine Schraube, mit einem an der Metallplatte (16, 22) anlegbaren Flansch (2, 13, 23, 28), **dadurch gekennzeichnet, dass** in den Flansch (2, 13, 23, 28) ein koaxialer Metallring (5, 9, 14, 19, 25) eingebettet ist, der mit einer Stirnseite mit der Oberfläche der Metallplatte (16, 22) in Berührungskontakt bringbar und bei Rotation des Mutterteils (1, 11, 12, 18, 24) zusammen mit dem Metallring (5, 9, 14, 19, 25) durch Reibschweißen mit der Metallplatte (16, 22) verbindbar ist.

2. Mutterteil nach Anspruch 1, **dadurch gekennzeichnet, dass** der Metallring (5, 9) mit einem koaxialen Kragen (6, 10) aus dem Flansch (2) herausragt, der in Reibschweißkontakt mit der Metallplatte bringbar ist.

3. Mutterteil nach Anspruch 2, **dadurch gekennzeichnet, dass** der Kragen (6) am Innenrand des Metallrings (5) ansetzt.

4. Mutterteil nach Anspruch 2, **dadurch gekennzeichnet, dass** der Kragen (10) am Außenrand des Metallrings (9) ansetzt.

5. Mutterteil nach einem der Ansprüche 2 bis 4, **dadurch gekennzeichnet, dass** der Kragen (6, 10) in Einschraubrichtung des Befestigungsmittels gerichtet ist.

6. Mutterteil nach einem der Ansprüche 2 bis 4, **dadurch gekennzeichnet, dass** der Kragen (15) gegen die Einschraubrichtung des Befestigungsmittels gerichtet ist.

7. Mutterteil nach einem der Ansprüche 2 bis 6, **dadurch gekennzeichnet, dass** der Kragen (6, 10, 15) zylindrisch verläuft.

8. Mutterteil nach einem der Ansprüche 2 bis 6, **dadurch gekennzeichnet, dass** der Kragen (20) konisch verläuft.

9. Mutterteil nach Anspruch 1, **dadurch gekennzeichnet, dass** der Metallring (5, 9) Durchbrüche (7) aufweist, die in eingebetteter Lage vom Material des Flansches (2) durchsetzt sind.

10. Mutterteil nach einem der Ansprüche 1 bis 9, **dadurch gekennzeichnet, dass** der Flansch (2) einen Sechskant bildet.

11. Mutterteil nach einem der Ansprüche 1 bis 9, **dadurch gekennzeichnet, dass** das Mutterteil (18) mit einer Aufnahme (24) für ein Einsetzwerkzeug versehen ist.

12. Mutterteil nach einem der Ansprüche 1 bis 13, **dadurch gekennzeichnet, dass** der zusammen mit dem Flansch (13) das Mutterteil (12) ausbildende Tubus (32) als Vieleck ausgebildet ist.

13. Mutterteil nach Anspruch 1, **dadurch gekennzeichnet, dass** der Metallring (25) das Mutterteil (24) mit Durchbrüchen (29; 30) umgibt und in einem Kragen (27) an dem Flansch (28) entgegen der Einschraubrichtung herausragt.

14. Mutterteil nach Anspruch 12, **dadurch gekennzeichnet, dass** der Metallring (25) das Mutterteil (24) umgibt und als Vieleck ausgebildet ist.

## Claims

1. A rotation-symmetric plastic nut (1, 11, 12, 18, 24), which can be mounted in the perforation of a metal plate (16, 22), for a fastener, particularly a screw, which can be inserted into a hole (4) of the nut (1, 11, 12, 18, 24), with a flange (2, 12, 23, 28) which can be attached at the metal plate (16, 22), **characterized in that** a coaxial metal ring (5, 9, 14, 19, 25) is embedded in the flange (2, 12, 23, 28), whereby the metal ring can, with its front side, have contact to the surface of the metal plate (16, 22) and, with the nut (1, 11, 12, 18, 24) rotating, it can, together with the metal ring (5, 9, 14,19, 25), be connected to the metal plate (16, 22) by means of friction welding.

2. Nut according to claim 1, **characterised in that** the metal ring (5, 9) sticks out of the flange (2) with a coaxial collar (6, 10), which can have friction welding contact with the metal plate.

3. Nut according to claim 2, **characterised in that** the collar (6) starts at the inner edge of the metal ring (5).

4. Nut according to claim 2, **characterised in that** the collar (10) starts at the outer edge of the metal ring (9).

5. Nut according to one of the claims 2 to 4, **characterised in that** the collar (6, 10) faces into screw-in direction of the fastener.

6. Nut according to one of the claims 2 to 4, **characterised in that** the collar (15) faces in opposite direction to the screw-in direction of the fastener.

7. Nut according to one of the claims 2 to 6, **characterised in that** the collar (6, 10, 15) has a cylindrical form.

8. Nut according to one of the claims 2 to 6, **characterised in that** the collar (20) has a conical form.

9. Nut according to claim 1, **characterised in that** the metal (5, 9) is provided with perforations (7) which, in embedded position, are intermingled with the material of the flange (2).

10. Nut according to one of the claims 1 to 9, **characterised in that** the flange (2) forms a hexagon.

11. Nut according to one of the claims 1 to 9, **characterised in that** the nut (18) is provided with a holder (24) for an insertion tool.

12. Nut according to one of the claims 1 to 13, **characterised in that** the tube which forms the nut (12) together with the flange (13) is formed as polygon.

13. Nut according to claim 1, **characterised in that** the metal ring (25) encompasses the nut (24) with perforations (29; 30) and, in a collar (27), sticks out at the flange (28) in opposite direction to the screw-in direction.

14. Nut according to claim 12, **characterised in that** the metal ring (25) encompasses the nut (24) and is formed as polygon.

## Revendications

1. Dans une perforation d'une plaque métallique (16, 22) un raccord femelle symétrique en rotation pouvant être monté, (1, 11, 12, 18, 24) en plastique pour un moyen de fixation pouvant être fixé dans un trou (4) du raccord femelle (1, 11, 12, 18, 24), en particulier une vis, avec une bride (2, 13, 23, 28) pouvant être installée sur la plaque métallique (16, 22), **caractérisé en ce que**, dans la bride (2, 13, 23, 28), un anneau métallique coaxial (5, 9, 14, 19, 25) est intégré, lequel entre en contact avec une face de la surface de la plaque métallique (16, 22) et pouvant être reliée à la plaque métallique (16, 22) par rotation du raccord femelle (1, 11, 12, 18, 24) avec l'anneau métallique (5, 9, 14, 19, 25) par un soudage par friction de la plaque métallique.

2. Raccord femelle selon revendication 1, **caractérisé en ce que** l'anneau métallique (5, 9) fait saillie au niveau de la bride (2) avec un collier coaxial (6, 10), qui est assemblé par soudage par friction à la plaque métallique.

3. Raccord femelle selon revendication 2, **caractérisé en ce que** le collier est apposé sur la bordure intérieure de l'anneau métallique (5).

4. Raccord femelle selon revendication 2, **caractérisé en ce que** le collier (10) est apposé sur la bordure extérieure de l'anneau métallique (9).

5. Raccord femelle selon revendications 2 à 4, **caractérisé en ce que** le collier (6, 10) est orienté dans le sens du vissage des pièces de fixation.

6. Raccord femelle selon revendications 2 à 4, **caractérisé en ce que** le collier (15) est orienté en sens inverse du vissage des pièces de fixation.

7. Raccord femelle selon revendications 2 à 6, **caractérisé en ce que** le collier (6, 10, 15) passe cylindriquement.

8. Raccord femelle selon revendications 2 à 6, **caractérisé en ce que** le collier (20) passe côniquement.

9. Raccord femelle selon revendication 1, **caractérisé en ce que** l'anneau métallique (5, 9) présente des perforations (7), qui sont exécutées dans une position intégrée du matériau de collier (2).

10. Raccord femelle selon revendications 1 à 9, **caractérisé en ce que** la bride (2) forme une barre hexagonale.

11. Raccord femelle selon revendications 1 à 9, **caractérisé en ce que** le raccord femelle (18) est munie d'une fixation (24) prévue pour un outil de démontage.

12. Raccord femelle selon revendications 1 à 13, **caractérisé en ce que** le tube (32) constituant le raccord femelle avec la bride (13) est conçu en rectangle.

13. Raccord femelle selon revendication 1, **caractérisé en ce que** l'anneau métallique (25) entoure le raccord femelle (24) avec des perforations (29, 30) et fait saillie au niveau du collier (27) sur la bride (28) en sens inverse du vissage.

14. Raccord femelle selon revendication 1, **caractérisé en ce que** l'anneau métallique (25) entoure le raccord femelle (24) et est conçu en rectangle.
